# EUROPEAN PATENT APPLICATION

(11) **EP 3 457 005 A1**
(43) Date of publication of application: **20.03.2019**
(21) Application number: 17796240.4
(22) Date of filing: 12.05.2017
(51) Int. Cl.: F16J 15/18

(54) **SEAL RING**

(30) Priority: 13.05.2016 JP 2016097005
(71) Applicant: NOK Corporation, Tokyo 105-8585 (JP)
(72) Inventor: WATANABE, Koji, Kitaibaraki-shi Ibaraki 319-1535 (JP)
(74) Representative: TBK
(86) International application number: PCT/JP2017/017978
(87) International publication number: WO 2017/195882

(57) **Abstract**

A seal ring capable of performing a sealing function even in a state where the fluid pressure is low. The seal ring includes a seal ring main body 100 made of resin, and an auxiliary seal ring 200 made of rubbery elastic material disposed on an outer peripheral surface of the seal ring main body 100 at a position with the largest diameter. When the fluid pressure is not applied, the outer diameter of the auxiliary seal ring 200 is larger than the inner diameter of an inner peripheral surface of a shaft hole of the housing through which the shaft is inserted.

## Description

### [Technical Field]

The present invention relates to a seal ring configured to seal an annular gap between a shaft and a shaft hole in a housing.

### [Background Art]

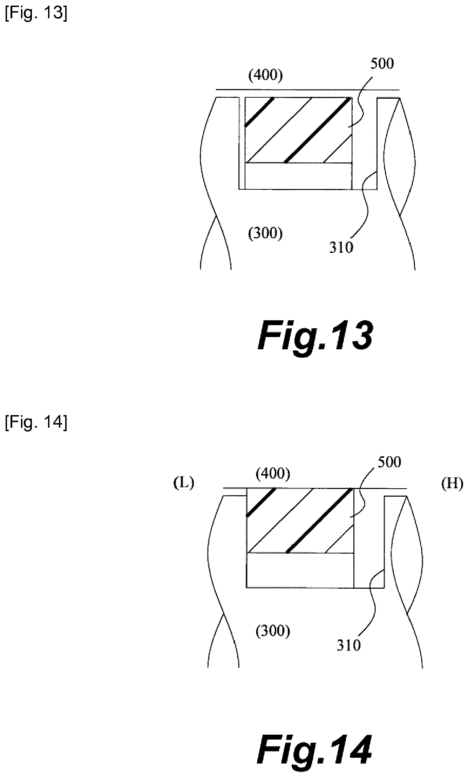

An automatic transmission (AT) or a continuously variable transmission (CVT) of automobiles has a seal ring to seal an annular gap between a shaft and a housing which relatively rotates so as to maintain the hydraulic pressure. A known seal ring will be described with reference to Figs. 13 and 14. Fig. 13 is a schematic cross-sectional view of the known seal ring in a state when the hydraulic pressure is not maintained. Fig. 14 is a schematic cross-sectional view of the known seal ring in a state when the hydraulic pressure is maintained. The known seal ring 500 is installed in an annular groove 310 disposed in an outer periphery of a shaft 300 and is slidably in contact with an inner peripheral surface of a shaft hole in a housing 400 through which the shaft 300 is inserted and a side wall surface of the annular groove 310, respectively, whereby the annular gap between the shaft 300 and the shaft hole in the housing 400 is sealed.

The sliding torque of the seal ring 500 used for the above mentioned purpose is to be considerably lowered. An outer peripheral surface of the seal ring 500 is therefore configured to have a shorter perimeter as compared to the inner peripheral surface of the shaft hole of the housing 400, so that interference is not generated. The diameter of the seal ring 500 increases in a state when the engine of the automobile is started and hydraulic pressure is high due to the hydraulic pressure, and the seal ring 500 is in contact with the inner peripheral surface of the shaft hole and the side wall surface of the annular groove 310, and sufficiently exhibits the function to maintain the hydraulic pressure (see Fig. 14). On the other hand, the seal ring 500 is out of contact with the inner peripheral surface of the shaft hole and the side wall surface of the annular groove 310 in a state when the engine is stopping and the hydraulic pressure is not applied to the seal ring 500 (see Fig. 13).

The seal ring 500 configured as described above does not exhibit the sealing function in a state when the hydraulic pressure is not applied. Hence the oil having been sealed by the seal ring 500 becomes unsealed in a state with no load when, for example, a hydraulic pressure pump is stopped in an idle stopping state in such a configuration as in AT and CVT where a shift transmission is controlled using oil compressed and fed by the hydraulic pressure pump, and then the oil returns to the oil pan and no longer exists around the seal ring 500. If the engine starts (restarts) in such state with no oil around the seal ring 500, degradation of a response and operation property of the engine may occur due to lack of lubrication.

### [Citation List]

### [Patent Literature]

[PTL 1] Japanese Patent Application Publication No. 2009-257439

### [Summary of Invention]

### [Technical Problem]

One or more aspects of the present invention is to provide a seal ring that can perform a sealing function even in a state where a fluid pressure is low.

### [Solution to Problem]

In response to the above issue, the present invention uses the following means.

The present invention provides a seal ring installed in an annular groove on an outer periphery of a shaft and configured to seal an annular gap between the shaft and a housing which rotate relative to each other to maintain a fluid pressure in a sealed region where the fluid pressure changes, the seal ring including:
a seal ring main body made of resin; and an auxiliary seal ring made of rubbery elastic material and disposed on an outer peripheral surface of the seal ring main body at a position with the largest diameter, wherein, when the fluid pressure is not applied, the outer diameter of the auxiliary seal ring is larger than the inner diameter of an inner peripheral surface of a shaft hole of the housing through which the shaft is inserted.

The seal ring according to the present invention is configured so that, when the fluid pressure is not applied, the outer diameter of the auxiliary seal ring is larger than the inner diameter of the inner peripheral surface of the shaft hole in the housing through which the shaft is inserted. This allows the auxiliary seal ring to keep in close contact with the inner peripheral surface of the shaft hole regardless of whether the fluid pressure is being applied or not. This prevents the seal ring from moving in an axial direction upon changing from a state where the fluid pressure is applied to a state where the fluid pressure is not applied. Hence the sealing function is exhibited even in a state where little or no fluid pressure is applied (a state with little or no differential pressure). Thus, the fluid pressure can be maintained upon increasing of the fluid pressure in the sealed region.

### [Advantageous Effects of Invention]

As described above, according to the present invention, the sealing function can be exhibited even in a state where the fluid pressure is low.

### [Brief Description of Drawings]

Fig. 1 is a side view of a seal ring according to Example 1.
Fig. 2 is an enlarged view of a part of the side view of the seal ring according to Example 1.
Fig. 3 is an enlarged view of a part of the side view of the seal ring according to Example 1.
Fig. 4 is an enlarged view of a part of the seal ring according to Example 1 when viewed from the outer peripheral surface side.
Fig. 5 is an enlarged view of a part of the seal ring according to Example 1 when viewed from the inner peripheral surface side.
Fig. 6 is a schematic cross-sectional view depicting a state of using the seal ring according to Example 1.
Fig. 7 is a schematic cross-sectional view depicting a state of using the seal ring according to Example 1.
Fig. 8 is a schematic cross-sectional view depicting Modification 1 of the auxiliary seal ring of the seal ring according to Example 1.
Fig. 9 is a schematic cross-sectional view depicting Modification 2 of the auxiliary seal ring of the seal ring according to Example 1.
Fig. 10 is a schematic cross-sectional view depicting Modification 3 of the auxiliary seal ring of the seal ring according to Example 1.
Fig. 11 is a schematic cross-sectional view depicting Modification 4 of the auxiliary seal ring of the seal ring according to Example 1.
Fig. 12 is a schematic cross-sectional view depicting Modification 5 of the auxiliary seal ring of the seal ring according to Example 1.
Fig. 13 is a schematic cross-sectional view depicting a state of using a known seal ring.
Fig. 14 is a schematic cross-sectional view depicting a state of using a known seal ring.

### [Description of Embodiment]

An embodiment of the present invention will be described in detail with reference to the drawings using the following example. The dimensions, materials, shapes and relative positions of the components described in the example are not intended to limit the scope of the invention unless otherwise specified. A seal ring according to Example 1 is used for maintaining hydraulic pressure in a transmission, as in AT and CVT, of an automobile, and seals the annular gap between a shaft and a housing which rotate relative to each other. When differential pressure is generated between both sides of the seal ring, a side where pressure is higher will be referred to as "high pressure side" a side where pressure is lower will be referred to as "low pressure side" in the following description.

### (Example)

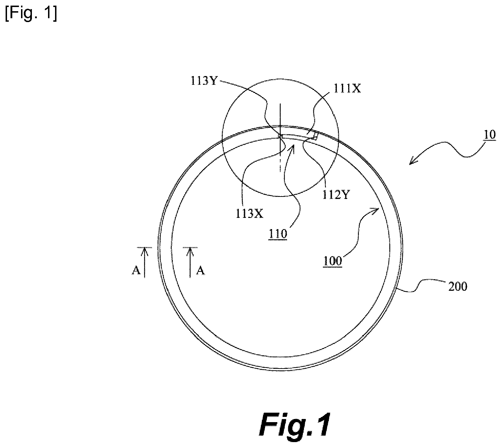

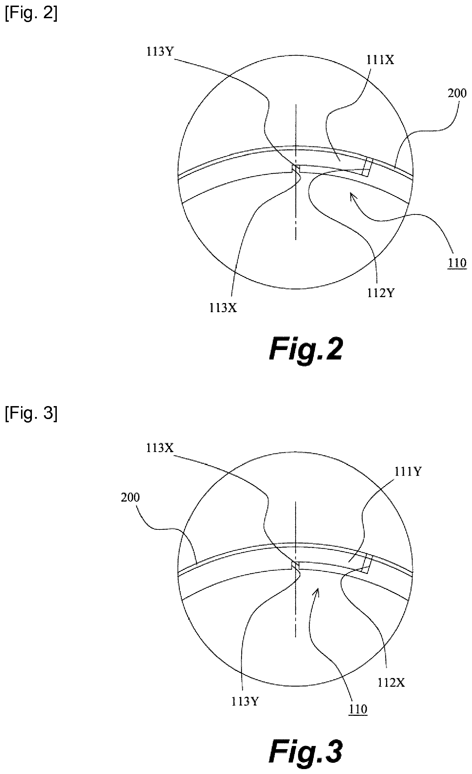

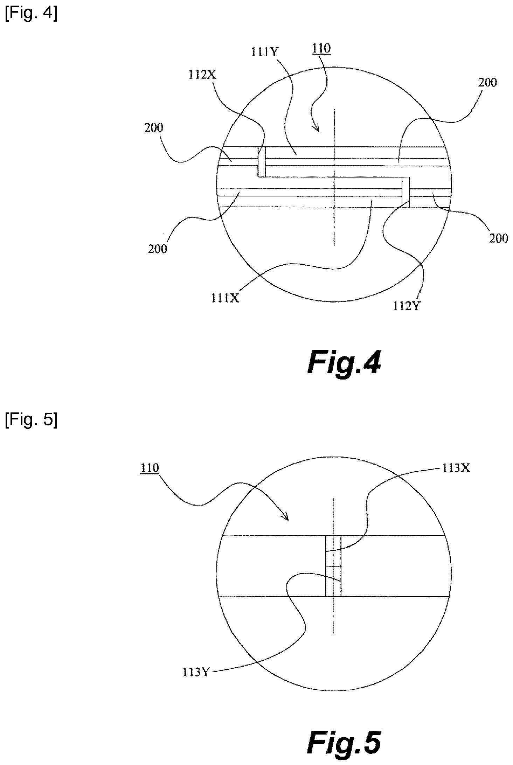

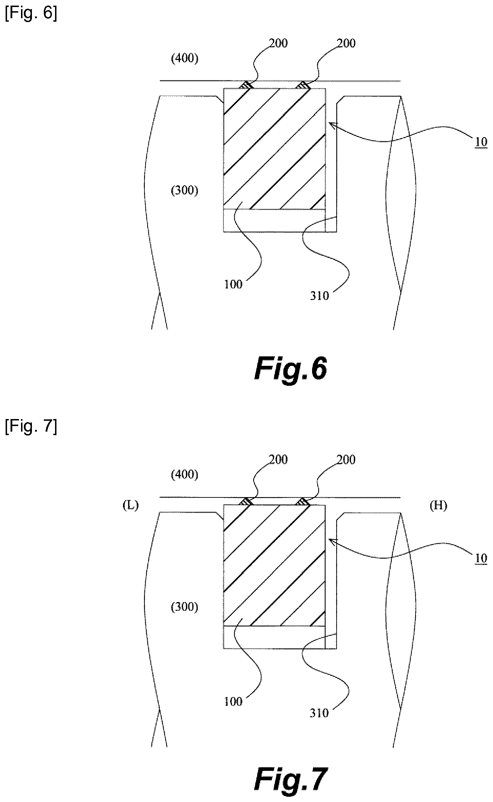

A seal ring according to Example 1 will be described with reference to Figs. 1 to 7. Fig. 1 is a side view (schematic side view) of the seal ring according to Example 1. Fig. 2 is an enlarged view of the side view of the seal ring according to Example 1 at a part indicated by a circle in Fig. 1. Fig. 3 is an enlarged view of the side view of the seal ring according to Example 1 at the part indicated by the circle in Fig. 1 when viewed from the opposite side. Fig. 4 is an enlarged view depicting the seal ring according to Example 1 at the part indicated by the circle in Fig. 1 when viewed from an outer peripheral surface side of the seal ring. Fig. 5 is an enlarged view depicting the seal ring according to Example 1 at the part indicated by the circle in Fig. 1 when viewed from an inner peripheral surface side of the seal ring. Figs. 6 and 7 are schematic cross-sectional views by A-A section indicated in Fig. 1 depicting a sealing structure (state of using the seal ring) according to Example 1. Fig. 6 depicts the sealing structure in a state at no load, and Fig. 7 depicts the sealing structure in a state where differential pressure is generated.

### <Sealing structure and configuration of seal ring>

The sealing structure and the configuration of the seal ring according to Example 1 will be described with reference to, in particular, Figs. 1, 6 and 7. The sealing structure according to Example 1 includes a shaft 300 and a housing 400 which rotate relative to each other, and a seal ring 10 which seals an annular gap between the shaft 300 and the housing 400, that is, between the shaft 300 and the inner peripheral surface of a shaft hole in the housing 400 through which the shaft 300 is inserted. The seal ring 10 according to Example 1 is installed in an annular groove 310 disposed on the outer periphery of the shaft 300, and seals the annular gap between the shaft 300 and the housing 400 which rotate relative to each other. Thereby the seal ring 10 maintains the fluid pressure in the sealed region where the fluid pressure (hydraulic pressure in Example 1) changes. Example 1 assumes that the fluid pressure in the right side region in Figs. 6 and 7 changes, and the seal ring 10 maintains the fluid pressure in the sealed region on the right side in Figs. 6 and 7. When the engine of the automobile is stopping, the fluid pressure in the sealed region is low and in a state at no load, but when the engine starts, the fluid pressure in the sealed region becomes high.

The seal ring 10 according to Example 1 includes a seal ring main body 100 made of resin and an auxiliary seal ring 200 made of rubbery elastic material disposed on the outer peripheral surface of the seal ring main body 100. Such materials as polyether ether ketone (PEEK), polyphenylene sulfide (PPS), and polytetrafluoroethylene (PTFE) may be used for the seal ring main body 100 and acrylic rubber (ACM), fluoro rubber (FKM), and hydrogenated nitrile butadiene rubber (HNBR) may be used for the auxiliary seal ring 200.

The auxiliary seal ring 200 of the seal ring 10 according to Example 1 is configured to have a larger outer diameter as compared to the inner diameter of the inner peripheral surface of the shaft hole in the housing 400, when the external force (fluid pressure) is not being applied.

### <Seal ring main body>

The seal ring main body 100 of Example 1 will be described in detail. The seal ring main body 100 has a joining portion 110 disposed at one location in the circumferential direction. This configuration of the joining portion 110 in the seal ring main body 100 may be described in such a way that a joining portion is formed in an annular member having a rectangle cross-section. This description, however, only gives an expression on the shape of the joining portion 110 and is not intended to limit the forming process of the joining portion to processing an annular member having a rectangle cross-section. That is, the joining portion 110 may be formed by molding annular member having a rectangle cross-section and then cutting it, or by molding an annular member having a joining portion if an appropriate resin material is used. The manufacturing method of the seal ring main body is not limited.

The joining portion 110 is formed by a so-called special step cut having joining surfaces (cut surfaces), which give a step-like appearance when viewed even from the outer peripheral surface side and both side wall surface sides. Specifically, the seal ring main body 100 has, on one side with respect to the joining surfaces, a first fitting convex 111X and a first fitting concave 112X, and, on the other side with respect to the joining surfaces and on the outer periphery side, a second fitting concave 112Y, into which the first fitting convex 111X is fitted, and a second fitting convex 111Y, which is fitted into the first fitting concave 112X. The end face 113X on the one side with respect to the joining surface and on the inner peripheral surface side faces the end face 113Y on the other side with respect to the joining surface and on the inner peripheral surface side. The special step cut allows the seal ring to stably maintain air tightness even if the perimeter of the seal ring main body 100 changes due to thermal expansion or thermal contraction. The joining surfaces (cut surfaces) may be formed not only by cutting but also by molding. The special step cut is a known technology, hence the details thereof are omitted.

### <Auxiliary seal ring>

The auxiliary seal ring 200 according to Example 1 will be described in detail. The auxiliary seal ring 200 is disposed on the outer peripheral surface of the seal ring main body 100 at a position with the largest diameter. The outer peripheral surface of the seal ring main body 100 has a cylindrical surface. "The auxiliary seal ring 200 is disposed on the outer peripheral surface of the seal ring main body 100 at a position with the largest" implies that the auxiliary seal ring 200 is formed on the seal ring main body 100 not by being inserted in a groove formed on the outer peripheral surface of the seal ring main body 100, but by being fixed using adhesion, monolithic molding or the like. Nevertheless, the auxiliary seal ring 200 may be disposed on the outer peripheral surface of the seal ring main body 100 by insertion on the condition that the auxiliary seal ring 200 can be fixed to the seal ring main body 100 with adequate positioning accuracy. The auxiliary seal ring 200 is disposed at two locations on both sides with respect to the central surface of the seal ring main body 100 in the width direction (see Figs. 4, 6 and 7). Each auxiliary seal ring 200 is disposed along the entire periphery of the outer peripheral surface of the seal ring main body 100, except for the joining portion 110 (see Fig. 4). The auxiliary seal ring 200 has a triangle shaped cross-section when sectioned by a plane including the central axis of the shaft 300 (see Figs. 6 and 7).

### <Mechanism when seal ring is in use>

The mechanism when the seal ring 10 according to Example 1 is in use will be described with reference to Figs. 6 and 7. Fig. 6 shows the sealing structure in a state at no load and with little or no differential pressure between the left and right region with respect to the seal ring 10 when the engine has stopped. Fig. 6 shows a cross-sectional view of the seal ring 10 by A-A section indicated in Fig. 1. Fig. 7 shows the sealing structure in a state where the fluid pressure in the right region is higher than that in the left region with respect to the seal ring 10 when the engine has started. Fig. 7 shows a cross-sectional view of the seal ring 10 by A-A section indicated in Fig. 1.

As described above, the outer diameter of the auxiliary seal ring 200 is set larger than the inner diameter of the inner peripheral surface of the shaft hole in the housing 400 when the fluid pressure is not applied to the seal ring 10 of Example 1. This enables the outer peripheral surface of the seal ring 10 (more specifically, the outer peripheral surface of the auxiliary seal ring 200) to keep in contact with the inner peripheral surface of the shaft hole of the housing 400 even when in the state at no load and with no differential pressure between the left and right regions (see Fig. 6).

When the engine starts and differential pressure is generated, the seal ring 10 comes in contact with the side wall surface of the annular groove 310 on the lower pressure side (L) due to the fluid pressure from the higher pressure side (H). The seal ring 10 keeps in contact with the inner peripheral surface of the shaft hole in the housing 400. Thus the side face of the seal ring main body 100 and the side wall surface of the annular groove 310 keep in contact and sliding on with each other while the shaft 300 and the housing 400 rotate relative to each other. The frictional force between the auxiliary seal ring 200 made of rubbery elastic material and the inner peripheral surface of the shaft hole of the housing 400 is set high so as to prevent sliding. Hence the sliding abrasion of the auxiliary seal ring 200 can be prevented. Thereby the annular gap between the shaft 300 and the housing 400 is sealed. When the engine stops and no load is applied thereafter, the outer peripheral surface of the seal ring 10 is in contact with the inner peripheral surface of the shaft hole of the housing 400, and the seal ring 10 hardly moves in the axial direction of the shaft 300. Thus, the seal ring 10 keeps in contact with the side wall surface of the annular groove 310 on the lower pressure side (L). This enables the annular gap between the shaft 300 and the housing 400 to be kept sealed even in a state at no load.

### <Advantages of seal ring of Example 1>

The auxiliary seal ring 200 of the seal ring 10 according to Example 1 is configured to have a larger outer diameter as compared to the inner diameter of the inner peripheral surface of the shaft hole in the housing 400, when the fluid pressure is not being applied. This allows the auxiliary seal ring 200 to keep in close contact with the inner peripheral surface of the shaft hole regardless of whether the fluid pressure is being applied or not. This prevents the seal ring 10 from moving in an axial direction upon changing from a state where the fluid pressure is applied to a state where the fluid pressure is not applied. Hence the sealing function is exhibited even in a state where little or no fluid pressure is applied (a state with little or no differential pressure). Thus, the fluid pressure can be maintained upon increasing of the fluid pressure in the sealed region.

Specifically in an engine having an idling stop function, the hydraulic pressure can be maintained upon beginning of increase in the hydraulic pressure in the sealed region when the engine having been in a stopped state restarts in response to pressing of an accelerator. A known seal ring made of resin may have function to prevent the leakage of fluid to some extent. The seal ring 10 of Example 1, by contrast, can sufficiently prevent the leakage of fluid because the annular gap between the shaft 300 and the housing 400 is continuously sealed even in a state at no load. This allows the differential pressure across the seal ring 10 to be maintained for a certain time after the engine stops and pumping action ceases. This means that the differential pressure of the engine having the idling stop function can be sufficiently maintained especially if duration of the state where the engine stops is not too long and the fluid pressure can be sufficiently maintained upon restarting of the engine.

The seal ring 10 according to Example 1 has a symmetric shape with respect to the central surface in the width direction. This allows the seal ring 10 to be installed in the annular groove 310 regardless of installation direction, thus installation is very easy. Further, the seal ring 10 can be used even in a configuration where the higher pressure side and the lower pressure side switch.

### (Other)

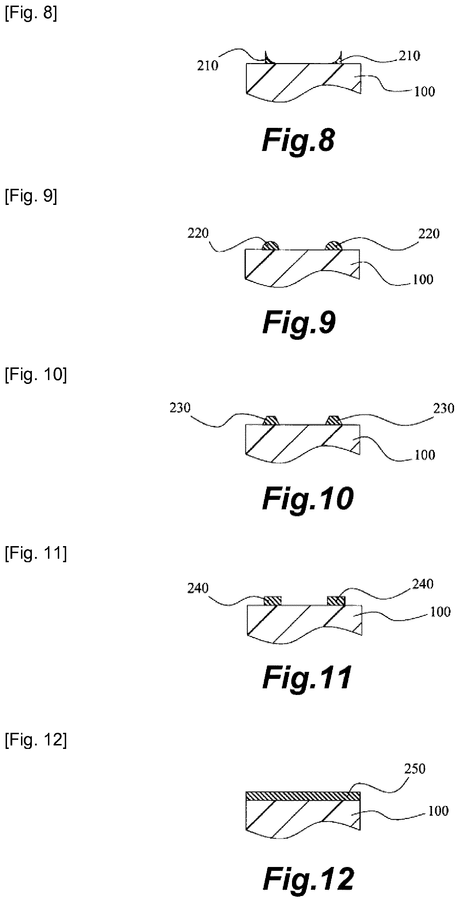

Although the cross-sectional shape of the auxiliary seal ring 200 in Example 1 is a triangle, the shape of the auxiliary seal ring according to the present invention is not limited to this example and may have various configurations. For example, as illustrated in Modification 1 in Fig. 8, an auxiliary seal ring 210 may have an approximate triangle shaped cross-section with an inclined line curved. Further, as illustrated in Modification 2 in Fig. 9, an auxiliary seal ring 220 may have a semicircle shaped cross-section. Further, as illustrated in Modification 3 in Fig. 10, an auxiliary seal ring 230 may have a trapezoid shaped cross-section. Furthermore, as illustrated in Modification 4 in Fig. 11, an auxiliary seal ring 240 may have a rectangle shaped cross-section.

Although the auxiliary seal ring 200 in Example 1 is disposed at two locations on both sides with respect to the central surface of the seal ring main body 100 in the width direction, the positions and a number of auxiliary seal rings according to the present invention are not limited to this. For example, as illustrated in Modification 5 in Fig. 12, an auxiliary seal ring 250 may have a rectangle shaped cross-section and be disposed so as to cover the entire outer peripheral surface of the seal ring main body 100.

Although the cross-sectional shape of the seal ring main body 100 in Example 1 is a rectangle, the shape of the seal ring main body according to this invention is not limited to this, but may have various shapes. For example, the seal main body may be formed by providing an annular cutting having a rectangle shaped cross-section on both side faces of an annular member having a rectangle shaped cross-section. The annular cutting on the side faces may be disposed on the inner peripheral surface side or on the outer peripheral surface side. In either case, the seal ring main body has a T-shaped cross-section. The seal ring main body may be an annular member having a rectangle cross-section with a dynamic pressure generating groove disposed on both side faces of the annular member.

Although the joining portion 110 in Example 1 is formed by the special step cut, various known techniques may be used for forming the joining portion. For example, a straight cut, a bias cut, a step cut and the like can be used. Since these are known techniques, a detailed description thereof is omitted. The straight cut is a structure where the annular member is cut linearly in the radial direction. The bias cut is a structure where the annular member is cut diagonally with respect to the radial direction. The step cut is a structure where the annular member is cut stepwise when viewed even from the outer peripheral surface and the inner peripheral surface, and is cut linearly when viewed from both side faces, or a structure where the annular member is cut stepwise when viewed from both side faces, and is cut linearly when viewed from the outer peripheral surface and the inner peripheral surface. The cutting structure may be formed by cutting or by molding. An endless seal ring without a joining portion may be used.

### [Reference Signs List]

- 10: Seal ring
- 100: Seal ring main body
- 110: Joining portion
- 111X: Fitting convex
- 111Y: Fitting convex
- 112X: Fitting concave
- 112Y: Fitting concave
- 113X: End face
- 113Y: End face
- 200, 210, 220, 230, 240, 250: Auxiliary seal ring
- 300: Shaft
- 310: Annular groove
- 400: Housing

## Claims

1. A seal ring installed in an annular groove on an outer periphery of a shaft and configured to seal an annular gap between the shaft and a housing which rotate relative to each other to maintain a fluid pressure in a sealed region where the fluid pressure changes,
the seal ring comprising:
a seal ring main body made of resin; and
an auxiliary seal ring made of rubbery elastic material and disposed on an outer peripheral surface of the seal ring main body at a position with the largest diameter, wherein
when the fluid pressure is not applied, the outer diameter of the auxiliary seal ring is larger than the inner diameter of an inner peripheral surface of a shaft hole of the housing through which the shaft is inserted.
